Europäisches Patentamt

European Patent Office

Office européen des brevets

(19)

(11) Veröffentlichungsnummer: **0 055 461**
**B1**

(12) **EUROPÄISCHE PATENTSCHRIFT**

(45) Veröffentlichungstag der Patentschrift:
**12.03.86**

(51) Int. Cl.⁴: **F 02 M 31/16**

(21) Anmeldenummer: **81110689.7**

(22) Anmeldetag: **22.12.81**

(54) Vorrichtung zur Verbesserung des Fliessvermögens von kaltem Dieselkraftstoff.

(30) Priorität: **29.12.80 DE 3049281**

(43) Veröffentlichungstag der Anmeldung:
**07.07.82 Patentblatt 82/27**

(45) Bekanntmachung des Hinweises auf die Patenterteilung:
**12.03.86 Patentblatt 86/11**

(84) Benannte Vertragsstaaten:
**AT BE CH FR GB IT LI LU NL SE**

(56) Entgegenhaltungen:
**DE - A - 1 962 132**
**DE - A - 2 606 113**
**DE - A - 2 841 249**
**DE - C - 354 909**
**US - A - 3 699 938**
**US - A - 4 083 340**
**US - A - 4 237 850**

(73) Patentinhaber: **Asam & Söhne,
D-8891 Unterwittelsbach/Obb. (DE)**

(72) Erfinder: **Asam, Gottfried, Falkenweg 5,
D-8890 Aichach-Unterwittelsbach (DE)**

(74) Vertreter: **Patentanwälte Beetz sen. - Beetz jun. Timpe -
Siegfried - Schmitt-Fumian, Steinsdorfstrasse 10,
D-8000 München 22 (DE)**

ACTORUM AG

## Beschreibung

Die Erfindung betrifft eine Vorrichtung zur Verbesserung des Fliessvermögens von kaltem Dieselkraftstoff der im Oberbegriff des Patentanspruchs angegebenen Gattung.

Es ist eine allgemein bekannte Tatsache, dass bei Diesel-Motoren eine Reihe von Betriebsproblemen insbesondere beim Kaltstarten auftreten, wenn die Umgebungstemperaturen unter den Gefrierpunkt abgesunken sind. Zur Minderung dieser auf Paraffinausscheidungen im Dieselkraftstoff zurückzuführenden Probleme werden in der Praxis dem Dieselkraftstoff Additive, z.B. etwa 10 Gew.-% Benzin, zugesetzt, welche eine ausreichende Filtrierbarkeit des Dieselkraftstoffs gewährleisten sollen.

Daneben sind auch bereits verschiedene Vorrichtungen zum Erwärmen des kalten Dieselkraftstoffs bekannt, um dessen Fliessvermögen vor bzw. beim Starten und während des Betriebes auch bei niedrigen Umgebungstemperaturen zu verbessern. So ist seit langem eine Einrichtung zum Vorwärmen des Brennstoffes von Brennkraftmaschinen gemäss DE-A-354 909 bekannt, welche eine möglichst schnelle Erwärmung des Brennstoffs auf hohe Temperaturen herbeiführen soll, um die Verwendung von leicht zündlichem Öl während der Anlaufperiode zu vermeiden oder einzuschränken. Zum Vorwärmen des Brennstoffes wird statt der heissen Auspuffgase oder des erwärmten Kühlwassers Druckluft verwendet, die durch die Kompression in einem zur Anlage gehörigen Kompressor erhitzt worden ist. Als Kompressor kann der mit der Maschine gekuppelte Verbrennungsluft-Verdichter benutzt werden, der bereits in der Einlassperiode der Maschine die erhitzte Druckluft für die Aufwärmung und Verflüssigen des viskosen Teeröls liefert. Zur Erzielung einer möglichst intensiven Teeröl-Aufwärmung kann die Heizeinrichtung in Form einer von Teeröl durchflossenen Wendel in einem Parallelzweig der Druckleitung angeordnet werden.

Aus der DE-A-2 206 113 ist eine Vorrichtung zum Verhindern des Aussulzens von Dieseltreibstoffen bekannt, bei welcher der Kraftstoff im Tank zumindest im Bereich der Saugöffnung der Abzugleitung erwärmt wird. Zu diesem Zweck sind unterschiedlich gestaltete elektrische Heizvorrichtungen im Bereich der Ansaugöffnung vorgesehen, die entweder als elektrisch leitender Ansaugfilter, als Kasten oder Rohr mit beheizten Innenwänden oder auch als von einem Heizgitter überspannte Glocke ausgebildet sein können. Diese Heizvorrichtungen bieten dem Benutzer zwar die freie Wahl des Ein- und Ausschalt-Zeitpunktes, sie können jedoch aufgrund ihres elektrischen Betriebes eine erhebliche Gefahrenquelle z.B. bei Kurzschlüssen und/oder leerem Tank darstellen. Nachteilig ist ferner die erhebliche Stromaufnahme dieser Heizvorrichtungen, die vor dem Kaltstart der gerade bei tiefen Umgebungstemperaturen eine mitunter erheblich verringerte elektrische Leistung abgebenden Batterie entnommen werden muss.

Schliesslich ist aus der US-A-4 237 850 eine Vorrichtung zum Erwärmen von kaltem Dieselkraftstoff der eingangs genannten Gattung bekannt, bei welcher in dem den Umgebungstemperaturen unmittelbar ausgesetzten Kraftstofftank ein Wärmetauscher in Form eines abgewinkelten U-Rohres befestigt ist. Als Heizmedium dient Kühlwasser, das vom Kühlsystem der Brennkraftmaschine abgezweigt und über Schlauchverbindungen dem Wärmetauscher zugeführt wird. Um vorgewärmten Dieselkraftstoff bereits für den Startbetrieb bereitstellen zu können, ist zwischen der Brennkraftmaschine und dem Wärmetauscher in dessen Zuleitung ein besonderes Heizgerät mit integrierter Wasserpumpe eingeschaltet, das nach dem Starten der Brennkraftmaschine abgestellt wird. Durch dieses zusätzliche Heizaggregat mit integrierter Wasserpumpe vergrössert sich zwangsläufig der bauliche Aufwand und auch der Energieverbrauch der gesamten Einrichtung.

Aufgabe der Erfindung ist es, eine Vorrichtung zur Verbesserung des Fliessvermögens von kaltem Dieselkraftstoff der angegebenen Gattung zu schaffen, die bei einfachem Aufbau und ohne zusätzliche Aggregate voll wirksam ist und gleichzeitig das verwendete Heizmedium günstig beeinflusst.

Diese Aufgabe wird durch die kennzeichnenden Merkmale des Patentanspruchs gelöst.

Die erfindungsgemässe Lösung geht von der Erkenntnis aus, dass moderne schwere Kraftfahrzeuge mit Dieselantrieb normalerweise zumindest mit einem Druckluft-Bremssystem sowie ggf. auch mit einer Druckluft-Federung ausgerüstet sind. Bevor derartige Kraftfahrzeuge in Betrieb gesetzt werden können, ist es unbedingt notwendig, dass ausreichend hochgespannte Druckluftmengen für das Bremssystem und die Federung zur Verfügung stehen. Vor oder mit dem Anlassvorgang wird daher ein Kolbenkompressor in Tätigkeit gesetzt, der die benötigten Luftmengen mit 5 bis 10 bar Druck erzeugt. Die in dieser Druckluft gespeicherten Wärmemengen reichen aus, um den Dieselkraftstoff zumindest im unmittelbaren Bereich des Ansaugrohrs bereits beim Anlassbetrieb über die Ausfälltemperaturen der Paraffine aufzuwärmen. Die Praxis hat gezeigt, dass bei Aussentemperaturen von unter –10°C der Dieselkraftstoff im Tank auf eine Temperatur von 20 bis 25°C aufgewärmt werden kann. Durch die Abkühlung der hochgespannten Druckluft im Wärmetauscher wird erfindungsgemäss weiter erreicht, dass die in der Druckluft vorhandenen Flüssigkeitsanteile praktisch vollständig in dem nachgeschalteten herkömmlichen Lufttrockner auskondensiert werden können, ohne dass gesonderte Wärmetauscher zur Minderung der Drucklufttemperatur auf ca. 60 bis 70° verwendet werden müssten. Ein handelsüblicher Lufttrockner mit einer Granulatfüllung ergab eine nahezu vollständige Trocknung der Druckluft, ohne dass das Granulat sich in irgendeiner nachteiligen Weise veränderte. Insbesondere wurden Schmelz- bzw. Sintererscheinungen des Kunststoffgranulats vermieden.

Druckluftkondensatoren zur Flüssigkeitsabscheidung sind in den Bremssystemen von schweren Kraftfahrzeugen seit langem bekannt. Eine Entwässerungsvorrichtung für derartige Druckluftanlagen mit einem gesonderten Wärmetauscher und einem Kondensatabscheider ist beispielsweise in der DE-A-1 962 132 beschrieben.

Im folgenden wird ein Ausführungsbeispiel der Erfindung anhand einer Schemazeichnung im einzelnen beschrieben.

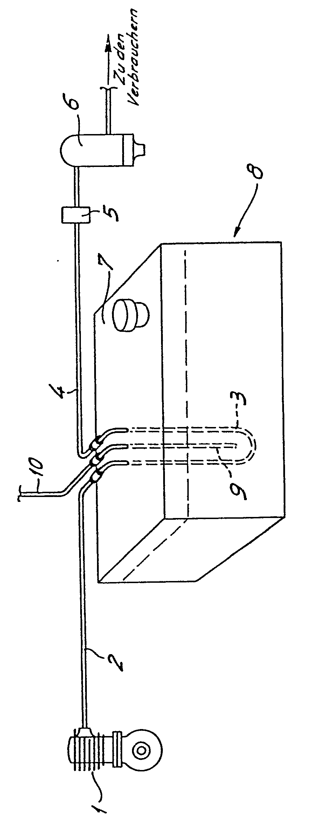

In der Zeichnung sind lediglich die zur Erläuterung des erfindungsgemässen Funktionsprinzips unbedingt notwendigen Aggregate grob schematsch dargestellt. Ein als Kolbenkompressor ausgebildeter Luftpresser 1 erzeugt die für das Bremssystem sowie auch für weitere druckmittelbetätigte Hilfsaggregate notwendige Druckluft, welche über einen ersten Druckleitungsabschnitt 2, einen Wärmetauscher 3 in Form eines U-Rohrs, einen weiteren Leitungsabschnitt 4 über einen Druckregler 5 zu einem Lufttrockner 6 gefördert wird. Durch die Kompression im Luftpresser wird die Druckluft im ersten Leitungsabschnitt 2 bis auf eine Temperatur bis maximal 180°C beim Ausströmen aus dem Luftpresser 1 in den Leitungsabschnitt 2 erwärmt, wobei der Druck über 10 bar beträgt, wenn das Kraftfahrzeug eine übliche Zweikreis-Bremsanlage und gegebenenfalls noch eine Druckluftfederung besitzt. Selbstverständlich sind die vorstehend angegebenen Temperatur- und Druckbereiche abhängig von der Grösse und Art des Kraftfahrzeuges. Wesentlich ist jedoch, dass die Druckluft mit einer Temperatur von ca. 80 bis 90°C aus dem Leitungsabschnitt 2 in den U-förmigen Wärmetauscher 3 einströmt und diesen mit einer Temperatur von ca. 60 bis 70°C verlässt.

Der Wärmetauscher 3 ist im dargestellten Ausführungsbeispiel durch übliche druckdichte Schraubverbindungen mit der oberen Wand 7 eines Kraftstofftanks 8 fest verbunden und an die jeweiligen Enden der Druckleitungs-Abschnitte 2 und 4 angeschlossen. Zwischen den beiden Schenkeln des U-Wärmetauscherrohres 3 ist ein Steigrohr 9 zum Abziehen des Dieselkraftstoffs über eine normale Förderleitung 10 derart angeordnet, dass ein möglichst intensiver Wärmeübergang zwischen dem U-Wärmetauscherrohr 3 und dem im Streigrohr 9 abfliessenden Dieselkraftstoff erfolgt. Diese Anordnung ist insbesondere für einen Anfahrbetrieb wichtig, um eine möglichst frühzeitige Erwärmung des kalten Dieselkraftstoffs zu erreichen und damit Ausfällungen von Paraffin-Kristallen zu vermeiden. Die jeweils optimale Form und Anordnung des Wärmetauschers kann entsprechend den Abmessungen und der Gestalt des Tanks 9 gewählt werden. Wesentlich ist jedoch in jedem Falle ein ausreichend intensiver Wärmeaustausch zwischen dem Dieselkraftstoff im Tank, insbesondere in unmittelbarer Umgebung der Einlauföffnung des Steigrohrs 9, und der den Wärmetauscher durchströmenden Druckluft. Diese sollte nach dem Abströmen aus dem Wärmetauscher in ausreichendem Masse abgekühlt sein, damit eine möglichst weitgehende Kondensation des mitgeführten Dampfes im Lufttrockner 6 erfolgt, ohne dass dessen Reinigungsgranulat thermisch übermässig beansprucht wird. Im Versuchsbetrieb mit der in der Zeichnung schematisch dargestellten Anlage ergab sich ein einwandfreies Betriebsverhalten der Diesel-Brennkraftmaschine auch bei Temperaturen von erheblich unter –15°C, ohne dass dem Dieselkraftstoff Additive oder Benzin beigemischt werden müsste. Der besondere praktische Effekt der erfindungsgemässen Vorrichtung zeigte sich insbesondere auch schon bei Temperaturen kurz unter dem Gefrierpunkt, und zwar in den Betriebssituationen, in denen keine Möglichkeit bestand, dem Kraftstoff irgendwelche Additive zumischen zu können. Darüber hinaus besticht die erfindungsgemässe Vorrichtung durch ihre konstruktive Einfachheit und ihre hohe Betriebszuverlässigkeit nicht nur hinsichtlich des Betriebsverhaltens der Diesel-Brennkraftmaschine, sondern darüber hinaus auch hinsichtlich der Funktionsfähigkeit der verschiedenen Aggregate in der Druckluft-Bremsanlage.

**Patentanspruch**

Vorrichtung zur Verbesserung des Fliessvermögens von kaltem Dieselkraftstoff im Kraftstoffsystem der Brennkraftmaschine eines Kraftfahrzeugs, mit einem Wärmetauscher (3), der im Innenraum eines Kraftstofftanks (8) in Form eines an der Tankwand (7) befestigten U-Rohres eingebaut und von einem Heizmedium durchströmt ist, dadurch gekennzeichnet

a) dass das Heizmedium die im Kompressor (1) eines Druckluft-Bremssystems komprimierte und bei der Kompression erwärmte Luft ist;
b) dass die einzige Druckleitung (2, 4) des Kompressors (1) den Wärmetauscher (3) bildet, welcher unmittelbar neben der Abzugsleitung (9) für den Dieselkraftstoff angeordnet ist und von der gesamten zum Bremssystem geförderten Druckluft durchströmt wird; und
c) dass in dem vom Wärmetauscher (3) abströmseitigen Abschnitt (4) der Druckleitung (2, 4) ein Lufttrockner (6) eingeschaltet ist.

**Claim**

A device for improving the fluidity of cold diesel fuel in the fuel supply system of the internal combustion engine of an automotive vehicle, comprising a heat exchanger (3) mounted in the interior of a fuel tank (8) in the form of a U-pipe secured to the tank wall (7) and having a flow of heating medium passing therethrough, characterised in

a) that the heating medium is air compressed in the compressor (1) of an air brake system and heated during compression;

b) that the single pressure line (2, 4) of the compressor (1) constitutes the heat exchanger (3), which is disposed directly adjacent the suction line (9) for the diesel fuel and has the entire compressed air supplied to the brake system passing therethrough; and

c) that an air dryer (6) is disposed in the section (4) of the pressure line (2, 4) downstream of the heat exchanger (3).

**Revendication**

Dispositif pour améliorer la fluidité de carburant diesel froid dans le système de carburant de la machine thermique d'un véhicule automobile, comportant un échangeur de chaleur (3) qui est monté, sous la forme d'un tube en U fixé à la paroi (7) d'un réservoir de carburant, à l'intérieur de ce réservoir (8), et qui est parcouru par un fluide chauffant, caractérisé

a) en ce que le fluide chauffant est l'air comprimé par le compresseur (1) d'un système de freinage à air comprimé et échauffé lors de la compression;

b) en ce que l'unique conduite de pression (2, 4) du compresseur (1) constitue l'échangeur de chaleur (3) qui est agencé à proximité immédiate de la conduite (9) d'extraction de carburant diesel et qui est parcouru par la totalité de l'air comprimé transporté jusqu'au système de freinage; et

c) en ce qu'un sécheur d'air (6) est inséré sur la portion (4) de la conduite de pression (2, 4) située côté sortie de l'échangeur de chaleur (3).